# EUROPÄISCHE PATENTANMELDUNG

(11) **EP 1 276 249 A1**
(43) Veröffentlichungstag der Anmeldung: **15.01.2003**
(21) Anmeldenummer: 01116651.9
(22) Anmeldetag: 13.07.2001
(51) Int. Cl.: H04B 3/32

(54) **Vorrichtung zur Verbesserung der Übertragungseigenschaften eines Bündels elektrischer Datenleitungen und Anordnung zur Datenübertragung**

(71) Anmelder: Hecht, Reinhard, 93047 Regensburg (DE); Manstorfer, Karl, 93047 Regensburg (DE)
(72) Erfinder: Hecht, Reinhard, 93047 Regensburg (DE); Manstorfer, Karl, 93047 Regensburg (DE)
(74) Vertreter: Patentanwälte Schaad, Balass, Menzl & Partner AG

(57) **Zusammenfassung**

Die Erfindung betrifft eine Vorrichtung zur Verbesserung der Übertragungseigenschaften eines Bündels elektrischer Datenleitungen, insbesondere eines Bündels Kupferdoppeladern, und eine Anordnung zur Datenübertragung mit wenigstens einer solchen Vorrichtung. Die Vorrichtung umfasst wenigstens ein adaptives Filter, das ein Ausgangssignal zur Korrektur des auf einer ersten Datenleitung übertragenen Signals erzeugt, wobei als Referenzsignal für das adaptive Filter wenigstens ein von einer zweiten Datenleitung abgegriffenes Signal oder ein externes Signal und als Fehlersignal für das adaptive Filter das auf der ersten Datenleitung übertragene korrigierte Signal verwendet wird. Erfindungsgemäss ist die Vorrichtung im Übertragungsweg angeordnet, so dass die Übertragungseigenschaften des Kabels unabhängig von den angeschalteten Geräten und verwendeten Übertragungstechniken insbesondere bei hochbitratiger Übertragung verbessert werden.

## Beschreibung

Die Erfindung betrifft eine Vorrichtung zur Verbesserung der Übertragungseigenschaften eines Bündels elektrischer Datenleitungen gemäss Anspruch 1 sowie eine Anordnung zur Datenübertragung gemäss Anspruch 11.

Bei der Übertragung von Daten über mehrere Datenleitungen, die sich in unmittelbarer räumlicher Nähe zueinander befinden, besteht das Problem des Übersprechens, insbesondere des Nah- und/oder Fernnebensprechens (Near bzw. Far End Cross Talk, NEXT bzw. FEXT). Derartige Probleme treten insbesondere bei der Beschaltung der eigentlich für Niederfrequenzübertragung ausgelegten Kupferkabel im Zugangsbereich eines Telekommunikationsnetzes mit hochbitratigen Übertragungssystemen auf. Hochbitratige Übertragungssysteme wie xDSL (DigitalSubscriber Line, z.B. HDSL, SDSL, ADSL, VDSL) wurden entwickelt, um die vorhandene Infrastruktur aus Kupferdoppeladern in Ortsnetzkabeln und anderen Fernemeldekabeln für die Übertragung hoher Datenströme nutzbar zu machen. Die mehrfache oder gemischte Beschaltung dieser Kabel mit verschiedenen Übertragungstechniken führt häufig zum Problem der spektralen Inkompatibilität. Dabei stören sich mehrere Übertragungseinrichtungen, die an ein gemeinsames Kabel angeschaltet sind, gegenseitig. Die Fernmeldekabel können häufig nicht optimal genutzt werden. Die bei einer vorgegebenen Übertragungsqualität mögliche Übertragungskapazität ist begrenzt. Als Folge dürfen entweder nicht alle Aderpaare beschaltet werden, oder es ergeben sich Einschränkungen in den überbrückbaren Entfernungen.

Der Einfluss der Störungen kann gering gehalten werden, indem die an das Kabelbündel angeschalteten Endgeräte aufeinander abgestimmt werden, insbesondere synchronisiert werden. Dieses ist jedoch aufwendig und führt zu Einschränkungen bezüglich der verwendeten Modems und Übertragungstechniken.

Aus der US 5,970,088 ist beispielsweise ein Kompensationsverfahren für einen Pool aus N identischen logischen MDSL-Modems bekannt. Es dient zur Kompensation der NEXT Interferenz. Die Sender der Modems sind mit einem Taktgenerator synchronisiert. Die von den N Modems empfangenen Signale werden nach dem Empfang mittels einer Kompensationsschaltung entstört. Die Kompensationsschaltung besteht aus N Untereinheiten, von denen jeweils eine jeweils einem Modem zugeordnet ist. Eine Untereinheit umfasst N adaptive Filter, deren Ausgangssignal zur Korrektur des bereits vom Modem empfangenen und digitalisierten Signals dient. Als Referenzsignal für die adaptiven Filter dient das von jeweils einem der N Modems gesendete Sendesignal. Die Ausgangssignale aller adaptiven Filter einer Untereinheit werden kombiniert und zur Korrektur des bereits empfangenen Empfangssignals verwendet. Das in der US 5,970,088 beschriebene Kompensationsverfahren erfordert N identische Modems und ist daher nicht zum Entstören beliebiger Systeme geeignet.

Die Übertragungseigenschaften des Kabels selbst bleiben unverändert, und das bereits empfangene Signal wird nachträglich aufbereitet.

Der Erfindung liegt die Aufgabe zugrunde, eine Vorrichtung anzugeben, mit der die Übertragungseigenschaften eines Bündels elektrischer Datenleitungen verbessert wird, sodass unabhängig von den an die Datenleitungen angeschalteten Geräten eine Entstörung der Leitungen untereinander und damit eine Erhöhung der Übertragungskapazität ermöglicht wird.

Die Aufgabe wird gelöst durch eine Vorrichtung zur Verbesserung der Übertragungseigenschaften eines Bündels elektrischer Datenleitungen mit den Merkmalen von Anspruch 1. Die Aufgabe wird weiterhin gelöst durch eine Anordnung zur Datenübertragung mit einer solchen Vorrichtung gemäss Anspruch 11. Vorteilhafte Weiterbildungen der Erfindung sind in den abhängigen Ansprüchen, der Beschreibung und den Zeichnungen angegeben.

Erfindungsgemäss umfasst die Vorrichtung wenigstens ein adaptives Filter, mit dem ein auf einer ersten Leitung übertragenes Signal entstört wird. Indem die Vorrichtung innerhalb der Übertragungsstrecke, z.B. an einem oder beiden Enden des Kabelbündels angeordnet ist, werden die Übertragungseigenschaften des Kabelbündels selbst verbessert. Kenntnisse über die verwendeten Übertragungstechniken bzw. die angeschlossenen Endgeräte sind nicht notwendig. Die Vorrichtung ist vollständig transparent und unabhängig von der Struktur der angeschlossenen Geräte. Den Teilnehmern müssen daher keine Einschränkungen hinsichtlich der verwendeten Geräte und Übertragungstechniken auferlegt werden, um eine hohe Übertragungsleistung bzw. - qualität zu erhalten.

Adaptive Filter zur Reduzierung bzw. Kompensation einer Störung unbekannter Natur auf einer Signalleitung sind an sich bekannt. Sie sind beispielsweise in B. Widrow und S. Stearns, 'Adaptive Signal Processing', Prentice-Hall, Inc., New Jersey, 1985, beschrieben. Ein auf einer Signalleitung übertragenes zu entstörendes Nutzsignal setzt sich zusammen aus dem ungestörten Signal und dem Störeinfluss der unbekannten Signalquelle. Ein mit dieser Signalquelle korreliertes Signal wird als Referenzsignal einem adaptiven Filter zugeführt. Das Filter erzeugt ein Kompensationssignal, das vom Nutzsignal subtrahiert wird. Das so erhaltene kompensierte Nutzsignal wird dem Filter als Fehlersignal zugeführt. Über einen geeigneten Adaptionsalgorithmus werden die Filterparameter so eingestellt, dass die Leistung des kompensierten Nutzsignals minimiert wird, das somit im Idealfall dem ungestörten Signal entspricht.

Die Erfindung kann in einer Vielzahl von Ausführungsformen realisiert werden, von denen einige in den Zeichnungen dargestellt sind. Jeder zu entstörenden Leitung ist wenigstens ein adaptives Filter zugeordnet. Dieses erzeugt ein Kompensationssignal, welches von dem auf der Leitung übertragenen Nutzsignal subtrahiert wird. Als Referenzsignal für das adaptive Filter dient wenigstens ein von einer weiteren Leitung abgegriffenes Signal, so dass der Störeinfluss, z.B. NEXT und/oder FEXT, der auf dieser Leitung übertragenen Signale reduziert wird. In dieser Variante der Erfindung ist für jeweils ein zu entkoppelndes Paar von Leitungen ein adaptives Filter vorgesehen. Es ist auch möglich, die Referenzsignale nur von denjenigen Leitungen, auf denen gesendet wird, abzugreifen.

Um die Anzahl adaptiver Filter zu reduzieren, werden in einer weiteren Variante die von den störenden Leitungen abgegriffenen Signale zu einem gemeinsamen Referenzsignal kombiniert, wobei beispielsweise ihre direkte oder gewichtete Summe gebildet wird. Dieses Referenzsignal wird dann einem gemeinsamen adaptiven Filter zugeführt.

In einer weiteren vorteilhaften Ausbildungsform, wird das Referenzsignal von einer nicht beschalteten Leitung abgegriffen. Dieses Signal ist eine Abbildung aller Störeinflüsse benachbarter Leitungen, auf denen gesendet oder empfangen wird. Das abgegriffene Signal gibt daher im wesentlichen auch die entsprechenden Störeinflüsse auf die zu entstörende Leitung wieder. Wird es erfindungsgemäss als Referenzsignal für ein adaptives Filter verwendet, gelingt eine schnelle Adaption des Filters und damit eine schnelle Kompensation.

In einer weiteren bevorzugten Ausführungsform wird ein Referenzsignal ausserhalb des Kabelbündels abgegriffen, beispielsweise an einer externen Antenne. Auf diese Weise können auch externe Störeinflüsse auf einzelne oder alle Datenleitungen kompensiert werden.

Um die erfindungsgemässe Vorrichtung in die Übertragungsstrecke einzubauen, sind vorzugsweise zwei Anschlüsse vorhanden, wobei der eine beispielsweise zum Anschluss des zu entstörenden Kabelbündels und der andere zum Anschluss eines zu einem oder mehreren Teilnehmern führenden Kabelbündels oder zum direkten Anschluss von Endgeräten, z.B. xDSL-Geräten dient. Die Vorrichtung umfasst des weiteren ein die Anschlüsse verbindendes Bündel aus vorrichtungsinternen Verbindungsleitungen, wobei diese Verbindungsleitungen wenigstens einen Anschlusspunkt aufweisen, über welchen Referenz- und/oder Fehlersignale abgegriffen und/oder Korrektursignale zugeführt werden können. Am externen Kabel selbst müssen daher keine Modifikationen vorgenommen werden.

Zum Entstören von Aderpaaren umfasst die Vorrichtung des weiteren Gabelschaltungen, mit denen die Sende- und Empfangssignale, welche sich gemeinsam auf jedem angeschalteten Aderpaar des Kabelbündels befinden, getrennt und jeweils einer eigenen internen Verbindungsleitung zugeordnet werden. An diesen Verbindungsleitungen können dann an geeigneter Stelle die Referenz- und Fehlersignale zur Einstellung der adaptiven Filter abgegriffen werden und die erzeugten Korrektursignale zugeführt werden. Bei einem Ausfall der adaptiven Filter, z.B. bei einem Stromausfall, wird der Datenfluss nicht unterbrochen.

Für eine möglichst gute Kompensation wird jede Datenleitung gegenüber jeder weiteren Datenleitung entkoppelt, indem beispielsweise für jede weitere Datenleitung ein adaptives Filter vorgesehen ist oder die von den weiteren Datenleitungen abgegriffenen Signale einem gemeinsamen adaptiven Filter als Referenzsignal zugeführt werden. Da das Übersprechen stark entfernungsabhängig ist, kann es für viele Anwendungen ausreichen, nur die unmittelbar benachbarten Datenleitungen gegeneinander zu entstören. Bei Fernmeldekabeln sind häufig zwei Paare von Kupferdoppeladern miteinander verdrillt. Mehrere solcher Sternvierer sind in einem gemeinsamen Grundbündel enthalten. Wiederum mehrere solcher Grundbündel bilden das Fernmeldekabel. In einem solchen Fall werden vorzugsweise wenigstens die Datenleitungen eines Sternenvierers und besonders bevorzugt auch die eines Grundbündels gegeneinander entstört.

Zur Einstellung der adaptiven Filter sind eine Vielzahl von Adaptionsmethoden bekannt, die alle die Minimierung des kompensierten Signals (Fehlersignal) anstreben. Beispielsweise können ein Least-Mean-Square (LMS)-Algorithmus, der RLS-Algorithmus (Recursive-Least-Squares-Algorithmus), Self-Recovering-Equalization- bzw. Blind-Equalization-Algorithmen oder ein anderes geeignetes Verfahren verwendet werden. Das Verfahren der Leistungsminimierung hat den Vorteil, dass die erfindungsgemässe Vorrichtung transparent bezüglich der Übertragungsraten, Leitungscodes und anderer Übertragungsparameter ist und keine Trainings- oder Synchronisationsverfahren benötigt werden.

Ausführungsbeispiele der Erfindung sind in den Zeichnungen dargestellt und im Folgenden beschrieben. Dabei zeigen rein schematisch:
- Fig. 1: Die prinzipielle Anordnung zweier erfindungsgemässer Vorrichtungen innerhalb einer Übertragungsstrecke;
- Fig. 2: ein erstes Beispiel für eine erfindungsgemässe Schaltungsanordnung mit einem Referenzpunkt pro Aderpaar;
- Fig. 3: ein weiteres Beispiel für eine erfindungsgemässe Schaltungsanordnung mit zwei Referenzpunkten pro Aderpaar;
- Fig. 4: ein weiteres Beispiel für eine erfindungsgemässe Schaltungsanordnung mit je einem Summierglied für Sende- bzw. Empfangssignale benachbarter Leitungen;
- Fig. 5: eine weitere erfindungsgemässe Schaltungsanordnung mit einem Summierglied für sämtliche Störsignale.

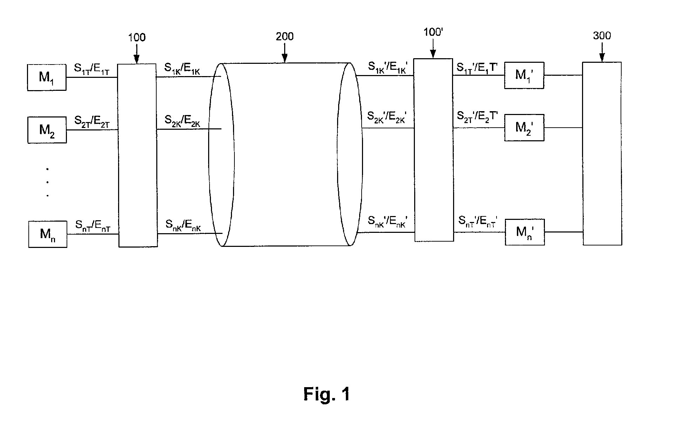

Fig. 1 zeigt eine erfindungsgemässe Anordnung zur Datenübertragung im Anwendungsfall mit einer zentralen Vermittlungseinrichtung 300 und einer Mehrzahl von Endgeräten M₁, M₂ ... Mₙ sowie M₁', M₂', ... Mₙ', die vorzugsweise xDSL-Modems sind. Die Endgeräte M₁ und M₁', M₂ und M₂' ... Mₙ und Mₙ' stellen 1...n beliebige xDSL-Verbindungen dar. Sie sind über jeweils ein Aderpaar S₁/E₁, S₂/E₂ ... Sₙ/Eₙ verbunden Die Bezugszeichen S_{iT}, S_{iK}, S'_{iT}, S'_{iK}, E_{iT}, E_{iK}, E'_{iT}, E'_{iK} bezeichnen jeweils das teilnehmer- bzw. kabelseitige Teilstück des Sende- bzw. Empfangswegs auf den beiden Kabelseiten. Die Aderpaare sind zu einem Bündel 200 von Leitungen zusammengefasst und befinden sich im Bereich dieses Kabels in unmittelbarer räumlicher Nähe zueinander. Zur Kompensation ihrer gegenseitiger Störeinflüsse befinden sich eine, erforderlichenfalls zwei erfindungsgemässe Vorrichtungen 100 bzw. 100' im Übertragungsweg zwischen den Modems und den Aderpaaren des Kabels. An ihrem vermittlungsseitigen Ende sind die einzelnen Aderpaare des Kabelbündels 200 mit den Endgeräten M₁', M₂' ... Mₙ' beschaltet. An ihrem teilnehmerseitigen Ende sind einzelne Aderpaare mit den Endgeräten M₁, M₂ ... Mₙ beschaltet. Diese Aderpaare können auch zu einem weiteren Grundbündel zusammengefasst sein.

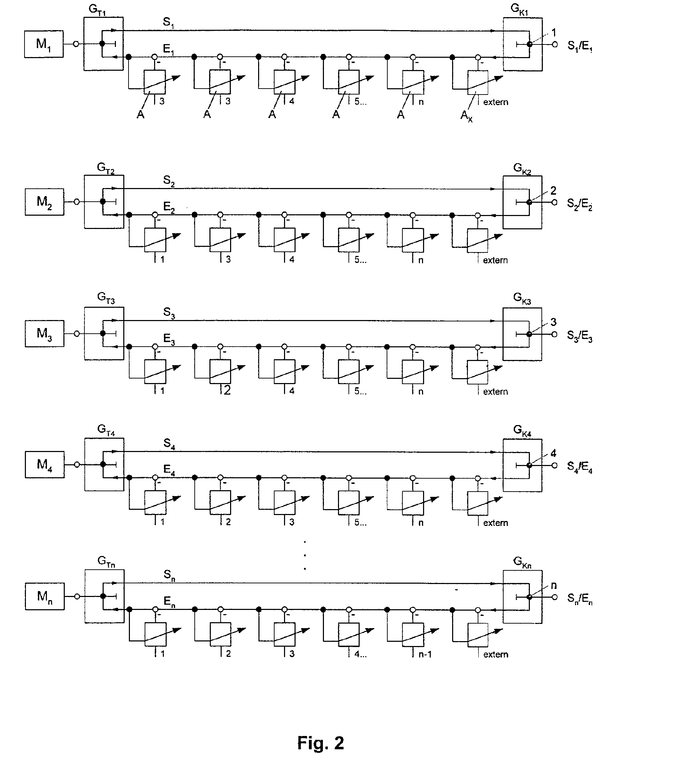

Fig. 2 zeigt ein erstes Beispiel für eine Schaltungsanordnung, die in einer erfindungsgemässen Vorrichtung verwendet werden kann. Eine Mehrzahl von Aderpaaren, S₁/E₁ , S₂/E₂ ... Sₙ/Eₙ , welche sowohl mit dem Sende- als auch dem Empfangssignal des zugehörigen Modempaares M₁ - M₁', M₂ - M₂' ... Mₙ - Mₙ' beschaltet sind, werden gegeneinander und gegen eine externe Störungsquelle entstört. Dazu wird jedes Aderpaar des Kabelbündels, welches zu Störungen der anderen Aderpaare beiträgt, mittels hochwirksamer Gabelschaltungen G_{K1}, G_{K2} ... G_{Kn} an der Kabelseite bzw. G_{T1}, G_{T2} ... G_{Tn} an der Teilnehmerseite in die Sendeleitungen S₁, S₂ ... Sₙ und die Empfangsleitungen E₁, E₂ ... Eₙ aufgeteilt. Zur Entstörung der Empfangssignale sind jeder Empfangsleitung E₁, E₂ ... Eₙ n adaptive Filter A zugeordnet, wobei n die Anzahl der vorhandenen Aderpaare angibt. Die adaptiven Filter erhalten als Referenzsignal das am kabelseitigen Gabelpunkt 1, 2 ... n jeweils eines benachbarten Aderpaares abgegriffene Signal. Dieses setzt sich zusammen aus dem auf diesem Aderpaar gesendeten und empfangenen Signal sowie aus den Störsignalen von den benachbarten Aderpaaren. Jeweils zwei Aderpaaren ist somit ein adaptives Filter zugeordnet, um das auf der ersten Empfangsleitung, z.B. E₁, übertragene Signal gegen das auf einem weiteren Aderpaar, beispielsweise S₂/E₂, übertragene Signal zu entstören. Ein weiteres adaptives Filter Aₓ, ist zur Kompensation eines externen Störeinflusses vorgesehen. Die erfindungsgemässe Schaltungsanordnung umfasst insgesamt eine Matrix aus n x n adaptiven Filtern, mit denen sämtliche Störeinflüsse wechselseitig kompensiert werden. Indem das Referenzsignal am Gabelpunkt benachbarter Adern abgegriffen wird, wird sowohl das Nahals auch das Fernnebensprechen kompensiert.

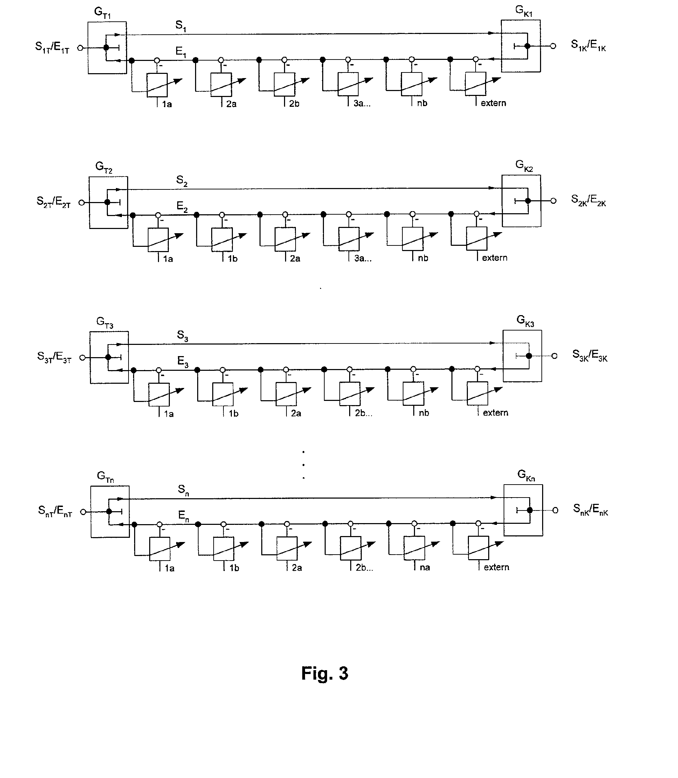

Fig. 3 zeigt eine weitere Schaltungsanordnung, bei der beispielsweise zum Entstören eines Empfangssignals auf dem Aderpaar S₁/E₁ pro benachbartem störenden Aderpaar zwei Referenzpunkte 2a, 2b; ... na, nb und die entsprechende Anzahl adaptiver Filter verwendet werden. Die Sende- und Empfangssignale werden separat als Referenzsignale verwendet. Des weiteren ist auch für das eigene Aderpaar ein adaptives Filter vorgesehen, welches als Referenzsignal das vom eigenen Modem gesendete Signal als Referenzpunkt 1 abgreift und damit eine Echokompensation bewirkt. Wie bei der Schaltungsanordnung gemäss Fig. 2 ist ein weiteres adaptives Filter für die Kompensation externer Störungen vorgesehen.

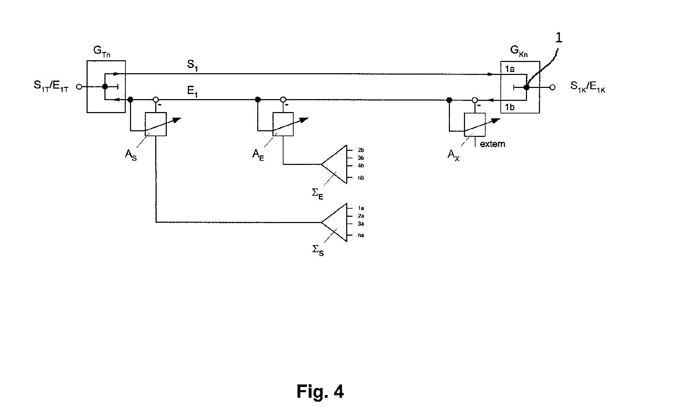

Fig. 4 zeigt ein weiteres Beispiel einer erfindungsgemässen Schaltungsanordnung, wobei nur ein Aderpaar und die zugeordneten adaptiven Filter dargestellt sind. Jedem Aderpaar sind vorliegend drei adaptive Filter A_{S}, A_{E}, A_{X}, zugeordnet. Ein Filter A_{S} erhält als Referenzsignal die in einem Summierglied Σₛ aufsummierte Summe sämtlicher Sendesignale von allen oder nur den übrigen Aderpaaren. Das zweite Filter A_{E} erhält als

Referenzsignal die in einem Summierglied Σ_{E} aufsummierte Summe sämtlicher Empfangssignale der übrigen Aderpaare. Ein Filter A_{X} dient zur Kompensation externer Störungen. Die Referenzpunkte 1a, 1b... na, nb entsprechen denen aus Fig. 3. Diese Anordnung kann einfach und kostengünstig realisiert werden, da die Anzahl adaptiver Filter gegenüber den Beispielen nach Fig. 2 und 3 reduziert ist.

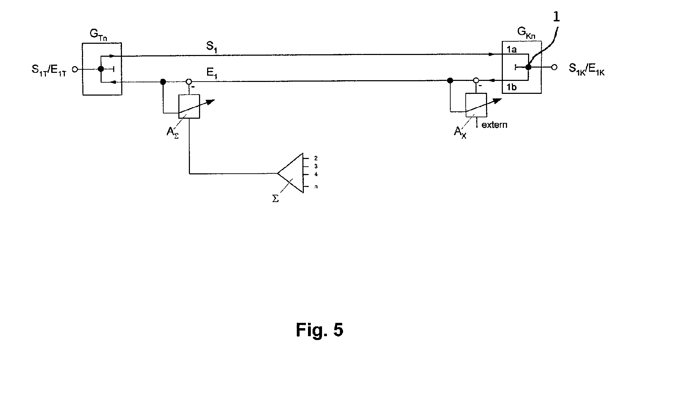

Eine weitere Vereinfachung ist in Fig. 5 dargestellt. Hierbei ist lediglich ein adaptives Filter A_{Σ} für sämtliche von benachbarten Aderpaaren abgegriffenen Störsignale vorhanden. Diese werden in einem Summierglied Σ aufsummiert, wobei das Summensignal als Referenzsignal dient. Ein Filter A_{X} dient wieder zur Kompensation externer Störungen.

In einer weiteren Vereinfachung der Schaltungsanordnung ist es denkbar, dass die Funktion von A_{X} in A_{Σ} integriert wird, so dass A_{X} entfallen kann.

Eine weitere Vereinfachung ergibt sich dadurch, dass der Lieferant für die Referenzsignale ein nicht beschaltetes Aderpaar verwendet wird. Auf ihm sind bei geeigneter Lage innerhalb des Kabels naturgemäß alle störenden Signale vorhanden. Somit kann das Summierglied entfallen und durch einen Operationsverstärker ersetzt werden, an welchem das Referenzaderpaar angeschlossen ist und welcher das Summierglied entkoppelt jedem Transversalfilter zur Verfügung stellt. Ein Filter A_{X} dient wieder zur Kompensation externer Störungen.

Weiterhin möglich ist eine Ausbildung der vorgegebenen Lösungsvariante dadurch, dass das Referenzaderpaar und das externe Störsignal an ein Summierglied mit nur noch zwei Eingängen angeschaltet wird. Dadurch kann das adaptive Filter A_{X} entfallen.

## Patentansprüche

1. Vorrichtung zur Verbesserung der Übertragungseigenschaften eines Bündels elektrischer Datenleitungen, insbesondere eines Bündels Kupferdoppeladern, mit wenigstens einem adaptiven Filter, das ein Ausgangssignal zur Korrektur des auf einer ersten Datenleitung übertragenen Signals erzeugt, wobei das Referenzsignal für das adaptive Filter wenigstens ein von einer zweiten Datenleitung abgegriffenes Signal und/oder ein externes Signal und das Fehlersignal für das adaptive Filter das auf der ersten Datenleitung übertragene korrigierte Signal ist, und wobei die Vorrichtung zur Anordnung im Übertragungsweg geeignet ist.

2. Vorrichtung nach Anspruch 1, **dadurch gekennzeichnet, dass** jeder zu entstörenden Datenleitung mehrere adaptive Filter zugeordnet sind, die als Referenzsignale jeweils ein von einer weiteren Datenleitung abgegriffenes Signal erhalten.

3. Vorrichtung nach Anspruch 1 oder 2, **dadurch gekennzeichnet, dass** ein adaptives Filter ein Referenzsignal erhält, das eine Kombination mehrerer von weiteren Datenleitungen abgegriffener Signale ist, vorzugsweise die Summe dieser Signale.

4. Vorrichtung nach einem der vorangegangenen Ansprüche, **dadurch gekennzeichnet, dass** wenigstens ein Referenzsignal von einer nicht zur Datenübertragung verwendeten Datenleitung abgegriffen wird.

5. Vorrichtung nach einem der vorangegangenen Ansprüche, **dadurch gekennzeichnet, dass** wenigstens ein Referenzsignal von einer ausserhalb des Bündels angeordneten Antenne abgegriffen wird.

6. Vorrichtung nach einem der vorangegangenen Ansprüche, **dadurch gekennzeichnet, dass** die Vorrichtung zur Anordnung im Übertragungsweg einen ersten und einen zweiten Anschluss zum Anschluss an externe Kabelbündel und/oder Endgeräte sowie ein die Anschlüsse verbindendes Bündel aus vorrichtungsinternen Verbindungsleitungen umfasst, wobei die vorrichtungsinternen Verbindungsleitungen wenigstens einen Anschlusspunkt aufweisen, über welchen Referenz- und/oder Fehlersignale abgegriffen und/oder Korrektursignale zugeführt werden können.

7. Vorrichtung nach Anspruch 6, **dadurch gekennzeichnet, dass** das Fehlersignal an einer einer ersten Datenleitung zugeordneten ersten Verbindungsleitung anliegt und das Referenzsignal zum Entstören der ersten Datenleitung von einer der zweiten Datenleitung zugeordneten zweiten Verbindungsleitung abgegriffen wird.

8. Vorrichtung nach Anspruch 6 oder 7, **dadurch gekennzeichnet, dass** das zu entstörende Bündel Aderpaare umfasst, die aus jeweils zwei elektrischen Datenleitungen gebildet sind und auf denen Sende- und Empfangssignale gemeinsam übertragbar sind, wobei die Vorrichtung für jedes Aderpaar zwei vorrichtungsinterne Verbindungsleitungen und entsprechende Gabelschaltungen aufweist, mit denen die Sende- und Empfangssignale getrennt und jeweils einer eigenen vorrichtungsinternen Verbindungsleitung zugeordnet werden.

9. Vorrichtung nach Anspruch 7 oder 8, **dadurch gekennzeichnet, dass** jeweils das Empfangssignal entstört wird, indem als Referenzsignal das Sendesignal oder das kombinierte Sende- und Empfangssignal wenigstens eines weiteren Aderpaars oder ein kombiniertes Sende- oder Sende- und Empfangssignal mehrerer weiterer Aderpaare durch Abgreifen an den entsprechenden vorrichtungsinternen Verbindungsleitungen verwendet wird.

10. Vorrichtung nach einem der Ansprüche 7 bis 9, **dadurch gekennzeichnet, dass** die Aderpaare zur Datenübertragung gemäss einem xDSL-Verfahren verwendet werden.

11. Anordnung zur Datenübertragung mit wenigstens einem Bündel elektrischer Datenleitungen (Kabel), Endgeräten und wenigstens einer Vorrichtung nach einem der vorangegangenen Ansprüche, die wenigstens an einem der Kabelenden im Übertragungsweg angeordnet ist.

12. Anordnung nach Anspruch 11, **dadurch gekennzeichnet, dass** die Vorrichtung im Bereich eines Hauptverteilers angeordnet ist.

13. Anordnung nach Anspruch 11 oder 12, **dadurch gekennzeichnet, dass** xDSL-Einrichtungen an das Kabel bzw. direkt an die Vorrichtung angeschaltet sind.
